# EUROPÄISCHE PATENTSCHRIFT

(11) **EP 3 291 585 B1**
(45) Veröffentlichungstag und Bekanntmachung des Hinweises auf die Patenterteilung: **02.10.2019**
(21) Anmeldenummer: 17188557.7
(22) Anmeldetag: 30.08.2017
(51) Int. Cl.: H04W 4/02, H04B 10/116, H04L 29/08, H04W 4/00, H04W 88/06, H04B 10/112, H04B 10/114, H04B 10/2575, H04W 84/12, H04W 4/80

(54) **HYBRIDE DRAHTLOSE DATENÜBERTRAGUNG MIT VISUAL LIGHT COMMUNICATION UND WLAN**
HYBRID WIRELESS DATA TRANSMISSION WITH VISUAL LIGHT COMMUNICATION AND WLAN
TRANSMISSION DE DONNÉES SANS FIL HYBRID AVEC VISUAL LIGHT COMMUNICATION ET WLAN

(30) Priorität: 31.08.2016 DE 102016116224
(43) Veröffentlichungstag der Anmeldung: 07.03.2018
(73) Patentinhaber: Deutsche Telekom AG, 53113 Bonn (DE)
(72) Erfinder: LANGE, Christoph, 10318 Berlin (DE); KOSIANKOWSKI, Dirk, 15732 Eichwalde (DE)
(74) Vertreter: Brandt & Nern Patentanwälte

(56) Entgegenhaltungen:
- WO-A1-2015/077767
- US-A1- 2014 248 049

## Beschreibung

Die Erfindung betrifft eine Lösung auf dem Gebiet der Telekommunikation, genauer gesagt der Übertragung digitaler Daten mit einer hohen Übertragungsrate in einem Kommunikationsnetz. Sie bezieht sich insbesondere auf die drahtlose Datenübertragung unter Nutzung verschiedener, sich ergänzender Übertragungstechniken. Gegenstand der Erfindung sind dabei ein entsprechendes Verfahren zur Datenübertragung und ein zur Durchführung dieses Verfahrens geeignetes System.

Die digitale Datenübertragung durchdringt in immer stärkerem Maße alle Lebensbereiche. Dies hat zur Folge, dass die Anforderungen bezüglich zu übertragender Datenmengen sowie an Übertragungsgeschwindigkeiten und Datenübertragungsraten in den letzten Jahren sehr stark gestiegen sind. Da außerdem der Bedarf einer Nutzung entsprechender Daten mit mobilen Endgeräten ständig steigt, betreffen die vorgenannten Anforderungen insbesondere auch die drahtlose Datenübertragung. Dabei hat die leitungslose Anbindung von Endgeräten, wie insbesondere von Laptopcomputern, Smartphones und Tablet-PCs, an Kommunikationsnetze unter Nutzer unterschiedlicher Funkübertragungstechniken, wie insbesondere der WLAN-Technik, inzwischen eine sehr weite Verbreitung gefunden. Durch die Verwendung eines unlizenzierten Funkspektrums bietet die WLAN-Technik in diesem Zusammenhang insbesondere innerhalb von Gebäuden, im Falle einer Überbrückung nur kurzer Distanzen aber auch im öffentlichen Raum außerhalb von Gebäuden, besondere Vorteile.

Trotz der mit der Fortschreibung der Standards erreichten deutlichen Erhöhung der in WLANs zur Verfügung stehenden maximalen Datenübertragungsrate, zeichnen sich inzwischen Anwendungsfälle ab, für welche die zur Verfügung stehenden Datenübertragungsraten nur bedingt oder teilweise nicht mehr ausreichend sind. Dies gilt insbesondere, wenn mehrere Nutzer Ressourcen innerhalb eines WLANs nutzen, da sich die Nutzer hierbei die im WLAN zu Verfügung stehende Datenübertragungsrate gewissermaßen teilen müssen. Ein Anwendungsfall, für welchen dann die zur Verfügung stehende Datenrate unter Umständen nicht ausreicht, ist zum Beispiel die Nutzung sogenannter Virtual Reality Techniken. So werden beispielsweise Nutzern mobiler Endgeräte Videoinformationen in hoher Qualität und Auflösung über Virtual Reality Brillen zur Verfügung gestellt. Wollen nun mehrere Nutzer in einem WLAN entsprechende Ressourcen nutzen, stoßen sie möglicherweise auch in nach den neuesten Standards eingerichteten WLANs hinsichtlich der Datenübertragungsrate an Grenzen.

Andererseits bietet gerade auch der Einsatz der WLAN-Technik eine Reihe von Vorteilen. Die WLAN-Technik wird insbesondere innerhalb von Gebäuden in einem sehr großen Umfang eingesetzt, ist zudem technisch sehr ausgereift und auch für den technisch weniger versierten Nutzer zur Vernetzung unterschiedlicher Geräte einfach anzuwenden. Darüber hinaus ermöglicht es diese Technik, WLAN-fähige Endgeräte in einem Raum zu orten. Detailliertere Abhandlungen zum Thema WLAN-Ortung und zur damit erzielbaren Genauigkeit finden sich zum Beispiel bei Deepak Vasisht et al: "Decimeter-Level Localization with a Single WiFi Access Point", Veröffentlichung im Rahmen des 13. USENIX Symposiums on Networked Systems Design and Implementation (NSDI '16), Seiten 165 bis 178, 16. - 18. März 2016, Santa Clara, USA.

Gegenwärtig werden VR-Brillen der vorgenannten Art häufig noch leitungsgebunden, vorzugsweise über einen HDMI-Anschluss, mit einem leistungsstarken PC als der Quelle entsprechender Videoinformationen verbunden. Im Wege der drahtgebundenen Verbindung können die zur Übertragung von Videoinformationen hoher Qualität erforderlichen Datenübertragungsraten insbesondere über kurze Distanzen ohne Weiteres zur Verfügung gestellt werden. Allerdings ist der Nutzer einer Virtual Reality Brille im Falle einer drahtgebundenen Verbindung mit dem PC bezüglich seiner Bewegungsmöglichkeiten innerhalb eines Raumes unerwünschter Maßen doch stark eingeschränkt.

Daher geht das Bestreben selbstverständlich dahin, auch die Virtual Reality Brillen drahtlos mit einem Daten für die Vermittlung einer virtuellen Realität generierenden PC zu verbinden und sie dazu beispielsweise drahtlos in Heimnetzwerke einzubinden, also auch die an den Virtual Reality Brillen zur Verfügung zu stellenden Videoinformationen drahtlos an diese Brillen zu übertragen. Um dem Nutzer dabei ein realitätsnahes Erlebnis zu ermöglichen, müssen aber in diesem Zusammenhang Möglichkeiten gefunden werden, Übertragungskapazitäten, das heißt insbesondere Datenübertragungsraten, für die leitungslose Datenübertragung zur Verfügung zu stellen, welche über die derzeit verfügbaren deutlich hinausgehen.

In der US 2009/0208219 A1 wird ein System zur leitungslosen Kommunikation beschrieben, welches zur Übertragung von Daten zwischen einer sendenden und einer empfangenden Einheit in Abhängigkeit von Umgebungsbedingungen und einer jeweils benötigten Bandbreite wahlweise akustische oder optische Signale oder Funksignale verwendet. Das System ist vordergründig für die unmittelbare Kommunikation zweier Einheiten unter Wasser und somit nicht für die Kommunikation in einem Kommunikationsnetzwerk ausgelegt. Die Nutzung optischer Signale für die Datenübertragung kann dabei, abgesehen davon, dass das Wasser eine nicht zu starke Trübung aufweisen darf, nur erfolgen, wenn Sender und Empfänger der beiden miteinander kommunizierenden Einheiten des Systems durch deren Benutzer auf einander ausgerichtet werden.

Ferner wird durch die US 2014/0248049 A1 eine Lösung beschrieben, gemäß welcher zum Zweck der Datenübertragung zwischen zwei stationär auf den Dächern von Gebäuden angeordneten Sende- und Empfangseinrichtungen (Receivern) in Abhängigkeit von den jeweiligen äußeren Bedingungen entweder ein Funkkanal oder ein leitungsloser optischer Kanal mit einer Freiraumübertragung mittels Licht genutzt wird. Demnach werden Daten zwischen den beiden Transceivern bei Nebel oder Schnee über den Funkkanal, hingegen bei Regen über den optischen Kanal übertragen. Zudem widmet sich die Schrift der Ausrichtung der optischen Komponenten der zwar, wie gesagt, an den Gebäuden ortsfest angeordneten, jedoch dreh- und/oder schwenkbaren Transceiver im Sinne einer Feinjustierung dieser Komponenten.

Aus der WO 2015077767 A1 ist eine Lösung bekannt, gemäß welcher sich innerhalb eines Raumes bewegende Endgeräte mittels einer Mehrzahl von modulierte Lichtsignale aussendenden Deckenleuchten lokalisiert werden können. Gemäß der Schrift wird dabei die Möglichkeit festzustellen, wenn sich ein Endgerät aus dem durch eine Deckenleuchte ausgeleuchteten Bereich in den Leuchtbereich einer anderen Deckenleuchte bewegt, dazu genutzt, ein der Übertragung von Daten an das Endgerät dienendes Funksignal räumlich gewissermaßen auf dieses Endgerät zu fokussieren, dessen räumliche Ausdehnung also zu limitieren.

Aus der US 2014/072119 A1 ist eine Lösung bekannt, gemäß welcher Authentifizierungsdaten zwischen zwei mobilen Endgeräte über einen optischen Kanal ausgetauscht werden. Danach können Nutzdaten über einen Funkkanal ausgetauscht werden.

Aufgabe der Erfindung ist es, eine Lösung bereitzustellen, die in einem Kommunikationsnetz eine leitungslose Datenübertragung im Nahbereich von bis zu einigen zehn Metern mit Datenübertragungsraten ermöglicht, welche über die mit den etablierten Übertragungstechniken erreichbaren Datenübertragungsraten hinausgehen. Hierzu sind ein Verfahren und ein zur Durchführung des Verfahrens geeignetes System anzugeben.

Die Aufgabe wird durch ein Verfahren mit den Merkmalen des Patentanspruchs 1 gelöst. Ein die Aufgabe lösendes und zur Durchführung des Verfahrens geeignetes System wird durch den ersten Sachanspruch charakterisiert. Vorteilhafte Aus- oder Weiterbildungen sind durch die jeweiligen Unteransprüche gegeben.

Das zur Lösung der Aufgabe vorgeschlagene Verfahren geht von einer leitungslosen Datenübertragung zwischen mindestens einer ersten und einer zweiten Kommunikationseinrichtung aus. Bei mindestens einer dieser Kommunikationseinrichtungen handelt es sich um eine Datenquelle, wohingegen mindestens eine andere als Datensenke fungiert. Das Verfahren geht von einer Konfiguration aus, bei der die mindestens eine Datenquelle und die mindestens eine Datensenke zueinander ortsveränderlich, aber in direkter optischer Sichtverbindung angeordnet sind. Gemäß dem Verfahren wird eine von der mindestens einen Datenquelle zu der mindestens einen Datensenke zu übertragende Datenmenge mit Nutzdaten unter Verwendung eines hybriden Übertragungsweges übertragen. Dies geschieht, indem ein Teil der Nutzdaten dieser Datenmenge über einen Funkkanal und die übrigen Teile der Nutzdaten der vorgenannten Datenmenge über einen gleichzeitig bestehenden leitungslosen optischen Direktkanal übertragen werden.

Die Nutzdaten werden hierbei von einem dafür ausgebildeten Steuermodul der mindestens einen Datenquelle durch Modulation auf entsprechende Trägersignale auf den Funkkanal und den optischen Direktkanal aufgeteilt. Nach ihrer Übertragung zu der mindestens einen Datensenke werden die Nutzdaten von einem dafür ausgebildeten Steuermodul dieser Datensenke im Zuge der Demodulation der von ihr empfangenen Trägersignale wieder zusammengeführt. Unter dem angesprochenen optischen Direktkanal wird im Kontext der Darstellungen zur Erfindung und der Patentansprüche ein Übertragungskanal als Teil des hybriden Übertragungsweges verstanden, über welchen Daten unter Nutzung eines optischen Trägersignals von der Datenquelle zu der sich in optischer Sichtverbindung zu der Datenquelle befindenden Datensenke auf direktem Wege, das heißt ohne Reflektion durch Spiegel oder Umlenkung mittels entsprechender optischer Komponenten, übertragen werden. In vorteilhafter Weise wird somit bei der Durchführung des erfindungsgemäßen Verfahrens weiterhin ein Übertragungsweg mit die Datenübertragung in einem nicht lizenzierten Spektrum ermöglichenden Trägersignalen genutzt.

Für den Funkkanal wird ein entsprechend dem WLAN-Standard für Netzwerke beschaffenes Trägersignal verwendet. Demgemäß kommen in dem Funkkanal auch die für den WLAN-Standard spezifizierten Übertragungsprotokolle zum Einsatz. Wie bereits ausgeführt sind die mindestens eine Datenquelle und die mindestens eine Datensenke zwar in direkter optischer Sichtverbindung, aber zueinander ortsveränderlich angeordnet. Unter Beachtung dessen wird die zur Übertragung der Nutzdaten zwischen ihnen etablierte WLAN-Funkverbindung erfindungsgemäß außerdem dazu genutzt, die optischen Komponenten der mindestens einen Datenquelle und der mindestens einen Datensenke unter Einsatz des Prinzips der WLAN-Ortung zueinander auszurichten und sie erforderlichenfalls einander nachzuführen.

Entsprechend einer bevorzugten Ausgestaltung des erfindungsgemäßen Verfahrens werden die Nutzdaten in dem optischen Direktkanal mittels eines für VLC standardisierten optischen Trägersignals übertragen, wobei VLC für Visual Light Communications (Kommunikation unter Verwendung sichtbaren Lichts) steht. Soweit im Zusammenhang mit dieser Verfahrensgestaltung von dem Standard für VLC die Rede ist, bezieht sich dies insbesondere auf die gemäß diesem Standard verwendeten Modulationsverfahren und Übertragungsprotokolle. Ungeachtet dessen muss nach diesem Verständnis jedoch nicht zwingend ein optisches Trägersignal mit einer Wellenlänge innerhalb des Wellenlängenbereichs des sichtbaren Lichts zum Einsatz gelangen. Vielmehr sollen gemäß dieser Ausgestaltung auch Trägersignale mit Wellenlängen in dem zum sichtbaren Lichtbereich angrenzenden Infrarot- oder Ultraviolettbereich verwendet werden.

In Weiterbildung des Verfahrens kann es außerdem vorgesehen sein, dass die über den optischen Direktkanal zu übertragenden Nutzdaten einer an die mindestens eine Datensenke zu übertragenden Datenmenge in einem in der Datenquelle ausgebildeten oder mit dieser in einer Wirkverbindung stehenden Pufferspeicher für die Dauer des Ausrichtens oder Nachführens der optischen Komponenten von Datenquelle oder von Datenquelle und Datensenke, also bis zur Etablierung eines stabilen optischen Direktkanals, vorübergehend zwischengespeichert werden.

Ein die Aufgabe lösendes, zur Durchführung des zuvor beschriebenen Verfahrens geeignetes System umfasst zunächst mindestens eine Datenquelle und mindestens eine, in optischer Sichtverbindung zu der mindestens einen Datenquelle angeordnete Datensenke, zwischen denen Nutzdaten leitungslos zu übertragen sind. Während der Übertragung von Nutzdaten ist zwischen der mindestens einen Datenquelle und der mindestens einen Datensenke ein hybrider Übertragungsweg ausgebildet, welcher einen Funkkanal nach dem WLAN-Standard und einen optischen Direktkanal umfasst. Die Datenquelle weist zu diesem Zweck mindestens eine Funksendeeinheit und mindestens einen optischen Sender auf. Bestandteile der Datenquelle sind außerdem ein Steuermodul und eine Stelleinrichtung zur Ausrichtung des optischen Senders.

Hiermit korrespondierend weist die mindestens eine Datensenke mindestens eine Funkempfangseinheit und einen optischen Empfänger auf. Ferner ist die mindestens eine Datensenke ebenfalls mit einem Steuermodul ausgestattet. Die Steuermodule in der Datenquelle und der Datensenke steuern die zwischen ihnen erfolgende Datenübertragung über den hybriden Übertragungsweg im Hinblick auf die Verwendung des Funkkanals und des gleichzeitig genutzten optischen Direktkanals. Wie zum Verfahren beschrieben, werden demgemäß die Nutzdaten einer von der mindestens einen Datenquelle zu der mindestens einen Datensenke zu übertragenden Datenmenge durch das Steuermodul der mindestens einen Datenquelle durch Modulation auf entsprechende Trägersignale, nämlicher einerseits auf ein Funkträgersignal und andererseits auf ein optisches Trägersignal, auf die den hybriden Übertragungsweg ausbildenden Kanäle aufgeteilt. Im Zusammenhang mit der Demodulation der von der mindestens einen Datensenke empfangenen Trägersignale werden die dabei zurückgewonnenen Nutzdaten durch das Steuermodul der mindestens einen Datensenke zur unmittelbaren Ausgabe über geeignete Ausgabemittel oder zum Zwecke einer sonstigen Weiterverarbeitung wieder zusammengeführt.

Das Steuermodul der mindestens einen Datenquelle hat neben der bereits angesprochenen Aufgabe der Aufteilung der auszusendenden Nutzdaten auf die Übertragungskanäle die Aufgabe, die optischen Komponenten zueinander auszurichten, also insbesondere den mindestens einen optischen Sender der Datenquelle, unter Verwendung des Prinzips der WLAN-Ortung in Richtung des optischen Empfängers der mindestens einen Datensenke auszurichten und erforderlichenfalls den optischen Sender dem optischen Empfänger der sich gegebenenfalls bewegenden Datensenke nachzuführen. Darüber hinaus kann außerdem auch die mindestens eine Datensenke über eine Stelleinrichtung verfügen, nämlich über eine Stelleirichtung zur Ausrichtung ihres optischen Empfängers. Bei einer solchen Ausbildung wird eine entsprechende Stelleinrichtung der mindestens einen Datensenke durch deren Steuermodul ebenfalls auf Basis der WLAN-Ortung angesteuert.

Die mindestens eine Datenquelle kann entsprechend einer bevorzugten Ausbildungsform des erfindungsgemäßen Systems, korrespondierend mit einer entsprechenden Verfahrensgestaltung, noch mit einem Pufferspeicher ausgestattet sein oder mit einem solchen Pufferspeicher in einer Wirkverbindung stehen. Wie bereits zum Verfahren ausgeführt, dient dieser Pufferspeicher dazu, Teile der zur Übertragung über den optischen Direktkanal vorgesehenen Daten temporär zwischenzuspeichern, sofern infolge einer Lageveränderung zwischen der mindestens einen Datenquelle und der mindestens einen Datensenke deren optischen Komponenten zur Etablierung eines stabilen optischen Übertragungskanals zunächst neu ausgerichtet werden müssen. Ergänzend sei an dieser Stelle noch angemerkt, dass die beiden zuvor jeweils als Datenquelle beziehungsweise Datensenke bezeichneten Kommunikationseinrichtungen, zwischen denen die Datenübertragung erfolgt, im Hinblick darauf, dass es sich in der Praxis bei einer solchen Datenübertragung im Allgemeinen um eine bidirektionale Übertragung handelt, jeweils auch gleichzeitig sowohl als Datenquelle als auch als Datensenke fungieren können.

Anhand von Zeichnungen sollen nachfolgend ein Ausführungsbeispiel für die Erfindung gegeben und ein möglicher Ablauf des erfindungsgemäßen Verfahrens dargestellt werden. Die Zeichnungen zeigen im Einzelnen:
- Fig. 1:: eine grobe schematische Darstellung einer möglichen Ausbildungsform des Systems,
- Fig. 2:: das Schema eines möglichen Ablaufs des erfindungsgemäßen Verfahrens.

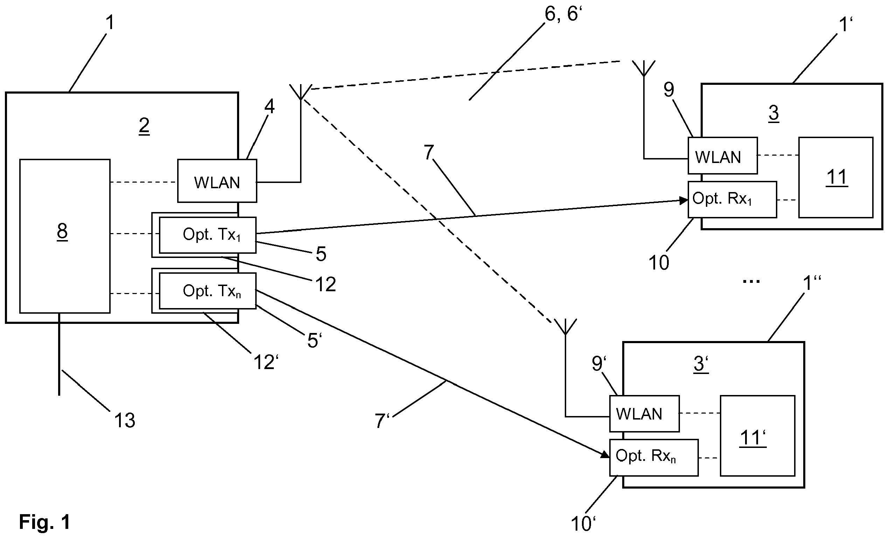

Die Fig. 1 zeigt eine mögliche Ausbildungsform des erfindungsgemäßen Systems in einer vereinfachten schematischen Darstellung. Wesentliche Bestandteile des Systems sind demnach mindestens zwei miteinander Daten austauschende Kommunikationseinrichtungen 1, 1', 1", nämlich mindestens eine Datenquelle 2 und mindestens eine Datensenke 3, 3', wobei das beispielhaft gezeigte System zwei Datensenken 3, 3' umfasst. Hierbei sei angenommen, dass es sich bei der Datenquelle 2 um einen ortsfesten, innerhalb eines Gebäudes betriebenen Accesspoint handelt und bei den Datensenken 3, 3'um entsprechend ausgebildete Endgeräte, hier VR-Brillen, deren Träger sich in dem Raum des Accesspoints aufhalten und bewegen. Der als Datenquelle 2 fungierende Accesspoint ist über einen Datenanschluss 13 mit einem nicht gezeigten, die Daten zur Darstellung einer virtuellen Realität generierenden PC oder einer (nicht gezeigten) sonstigen Computereinrichtung oder einem (nicht gezeigten) Rechenzentrum verbunden.

In der Praxis wird zwischen dem Accesspoint und den VR-Brillen ein bidirektionaler Datenaustausch erfolgen. Zur Vereinfachung wird jedoch in der Zeichnung nur die Übertragungsrichtung vom Accesspoint zu den beiden VR-Brillen betrachtet, so dass gemäß dieser Betrachtungsweise die zuvor benannte eindeutige Zuordnung gegeben ist, wonach der Accesspoint die Datenquelle 2 und die VR-Brillen Datensenken 3, 3' darstellen. Bei dem gezeigten Ausführungsbeispiel werden insbesondere in der Downstreamrichtung, also bei der Übertragung von Daten vom Accesspoint zu den VR-Brillen, hohe Datenübertragungsraten benötigt, welche durch die Erfindung in besonders vorteilhafter Weise unter Nutzung eines nichtlizenzierten Übertragungsspektrums (funk und optisch) für die Trägersignale zur Verfügung gestellt werden.

Sowohl die Datenquelle 2, also der Accesspoint, als auch die Datensenken 3, 3', nämlich die VR-Brillen als Endgeräte mit zumeist hohen Datenanforderungen, sind hierbei entsprechend der Erfindung ausgebildet. Demgemäß umfasst die Datenquelle 2 eine Funksendeeinheit 4 zur Verwendung in einem WLAN, zwei optische Sender 5, 5', ein Steuermodul 8 und eine im Detail nicht näher gezeigte Stelleinrichtung 12, 12' je optischem Sender 5, 5'. Bestandteile der beiden Datensenken 3, 3' sind jeweils eine Funkempfangseinheit 9, 9' zur Verwendung in einem WLAN, ein optischer Empfänger 10, 10' und ein Steuermodul 11, 11'. Während einer Übertragung von Daten mit hoher Datenübertragungsrate ist zwischen der Datenquelle 2 und jeder Datensenke 3, 3' jeweils ein hybrider Übertragungsweg ausgebildet. Dieser umfasst jeweils einen Kanal zur Funkübertragung (Funkkanal 6, 6' nach dem WLAN-Standard) und einen optischen Direktkanal 7, 7', wobei die von der Funksendeeinheit 4 der Datenquelle 2 zur Übertragung von Daten an beide Datensenken 3, 3' genutzte Funkstrecke beispielsweise durch die Verwendung unterschiedlicher Trägerfrequenzen oder durch entsprechende Adressierung übertragener Datenpakete gewissermaßen logisch in zwei Funkkanäle 6, 6' unterteilt wird.

Bei der Datenübertragung unter Nutzung des hybriden Übertragungsweges werden durch das Steuermodul 8 der Datenquelle 2 die Daten einer jeweiligen, an eine der Datensenken 3, 3' zu übertragenden Datenmenge auf den jeweiligen Funkkanal 6, 6' und den optischen Direktkanal 7, 7' des zu der betreffenden Datensenke 3, 3' ausgebildeten Übertragungsweges aufgeteilt. Gesteuert durch das Steuermodul 8 wird demnach ein Teil der Daten auf ein Funkträgersignal und ein anderer Teil nach dem Prinzip der VLC auf ein optisches Trägersignal aufmoduliert. Die bei einer Datensenke 3, 3', also bei einer von einem sich im Raum bewegenden Nutzer getragenen VR-Brille, über den hybriden Übertragungsweg eingehenden Signale werden dort mittels der Funkempfangseinheit 9, 9' einerseits und des optischen Empfängers 10, 10' andererseits empfangen und die Nutzsignale, gesteuert durch das Steuermodul 11, 11' der Datensenke 3, 3', nach der Demodulation der entsprechenden Trägersignale zur optischen Ausgabe an der betreffenden VR-Brille zusammengeführt.

Vor der Übertragung von Daten an eine der Datensenken 3, 3' unter Nutzung des hybriden Übertragungsweges wird erforderlichenfalls zunächst der entsprechende optische Sender 5, 5' der Datenquelle 2 durch deren Steuermodul 8 zum optischen Empfänger 10, 10' der betreffenden Datensenke 3, 3' ausgerichtet. Diese Ausrichtung wird dann während der Datenübertragung dadurch beibehalten, dass der optische Sender 5, 5' dem zugehörigen optischen Empfänger 10, 10' der sich gegebenenfalls bewegenden Datensenke 3, 3'nachgeführt wird. Hierzu wird nach dem Prinzip der WLAN-Ortung jeweils die relative Position der Datensenke 3, 3' zur Datenquelle 2 festgestellt und danach der optische Sender 5, 5' mittels einer zugehörigen Stelleinrichtung 12, 12', gesteuert durch das Steuermodul 8 der Datenquelle 2, entsprechend ausgerichtet. Der optische Direktkanal 7, 7' wird zusätzlich zu dem gemäß dem WLAN-Standard aufgebauten Funkkanal 6, 6' jedenfalls immer dann genutzt, wenn ein entsprechend hoher Bedarf (eine entsprechend hohe Datenanforderung eines Endgerätes, im Beispiel einer VR-Brille) bezüglich der Datenübertragungsrate besteht. Dies ist üblicherweise dann gegeben, wenn VR-Inhalte auf eine der Datensenken 3, 3' beziehungsweise auf eine der VR-Brillen übertragen werden. Ist dies nicht der Fall, so kann gegebenenfalls zwischenzeitlich eine Übertragung von Daten auch nur unter Nutzung des Funckanals 6. 6' erfolgen. Der Funkkanal 6, 6' dient sowohl zur Übertragung von Steuerdaten, wie zum Beispiel zur Übertragung von Lokalisierungsdaten für die Ausrichtung des oder der optischen Sender 5, 5' der Datenquelle 2, als auch zur Übertragung von Nutzdaten.

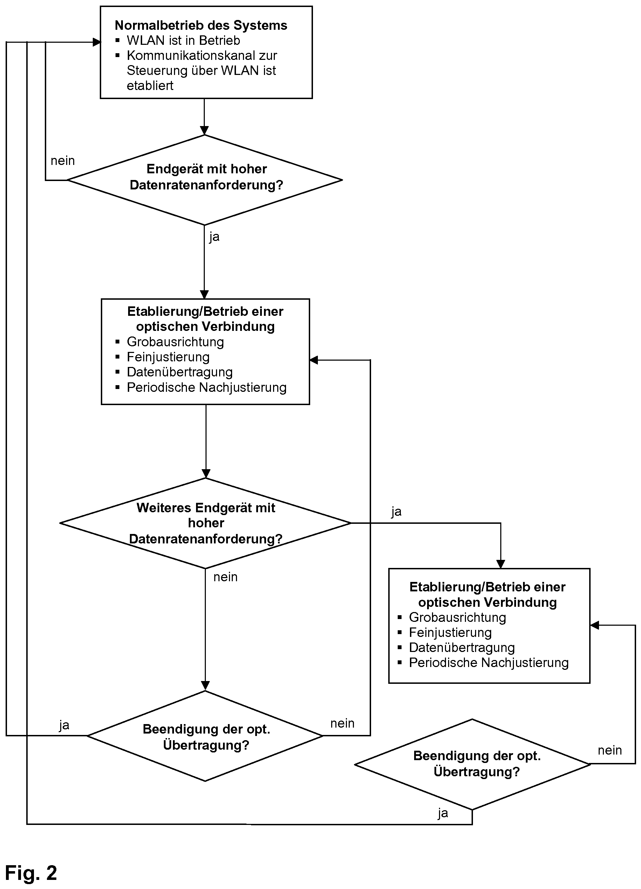

Die Fig. 2 zeigt einen möglichen Ablauf einer Datenübertragung unter Nutzung des erfindungsgemäßen Verfahrens und bei Verwendung des Systems nach der Fig. 1. Demnach ist im Normalbetrieb des Systems zumindest eine WLAN-Funkverbindung zwischen der Datenquelle 2 und den beiden Datensenken 3, 3' etabliert. Fordert nun eine der Datensenken 3, 3', nämlich eines der Kommunikationsgeräte 1', 1 " (Endgeräte) in Form einer VR-Brille, eine höhere Datenübertragungsrate an, so wird zusätzlich zu dem zu dieser Datensenke 3, 3' bereits bestehenden Funkkanal 6, 6' ein optischer Direktkanal 7, 7' etabliert und damit zwischen dieser Datensenke 3, 3' und der Datenquelle 2 ein hybrider Übertragungsweg aufgebaut. Hierzu erfolgt, gesteuert durch das Steuermodul 8 der Datenquelle 2, im Beispiel des Accesspoints, eine Ausrichtung des zur optischen Übertragung von Daten zu der betreffenden Datensenke 3, 3' ausgewählten optischen Senders 5, 5' der Datenquelle 2. Die Ausrichtung erfolgt unter Nutzung der WLAN-Ortung, mittels welcher die relative Lage der Datensenke 3, 3' zur Datenquelle 2 ermittelt und basierend hierauf zunächst eine Grobausrichtung und dann eine Feinjustierung des optischen Senders 5, 5'der Datenquelle 2 vorgenommen wird. Erforderlichenfalls, nämlich dann, wenn sich der Träger der VR-Brille mit dieser bewegt, erfolgt jeweils eine Nachjustierung des optischen Senders 5, 5', welcher so lange in Betrieb bleibt, wie entsprechend hohe Anforderungen an die Datenübertragungsrate bestehen.

Die Etablierung und der Betrieb der optischen Verbindungen erfolgt entsprechend der Anzahl der VR-Brillen (im Raum). Sobald eine der VR-Brillen die Anforderung einer entsprechend hohen Datenübertragungsrate beendet, wird die Anzahl der optischen Verbindungen entsprechend reduziert.

## Patentansprüche

1. Verfahren zur leitungslosen Datenübertragung zwischen mindestens einer ersten und einer zweiten Kommunikationseinrichtung (1, 1', 1 "), von denen mindestens eine als Datenquelle (2) und mindestens eine andere als Datensenke (3, 3') fungiert, wobei die mindestens eine Datenquelle (2) und die mindestens eine Datensenke (3, 3') zueinander ortsveränderlich, aber in direkter optischer Sichtverbindung angeordnet sind und wobei eine von der mindestens einen Datenquelle (2) zu der mindestens einen Datensenke (3, 3') zu übertragende Datenmenge mit Nutzdaten über einen hybriden, einen Funkkanal (6, 6') und einen optischen Direktkanal (7, 7') umfassenden Übertragungsweg übertragen wird, indem die Nutzdaten von einem hierfür ausgebildeten Steuermodul (8) der mindestens einen Datenquelle (2) durch Modulation auf entsprechende Trägersignale auf den Funkkanal (6, 6') und den optischen Direktkanal (7, 7') aufgeteilt und nach ihrer Übertragung von einem dafür ausgebildeten Steuermodul (11, 11') der mindestens einen Datensenke (3, 3') bei der Demodulation der empfangenen Trägersignale wieder zusammengeführt werden, wobei die Nutzdaten in dem Funkkanal (6, 6') mittels eines für WLAN-Netzwerke standardisierten Funkträgersignals übertragen werden und wobei ein optischer Sender (5, 5') der mindestens einen Datenquelle (2), mittels welchem Daten über den optischen Direktkanal (7, 7') ausgesendet werden, in Bezug auf einen diese Daten empfangenden optischen Empfänger (10, 10') der mindestens einen Datensenke (3, 3') auf der Grundlage einer WLAN-Ortung der mindestens einen Datensenke (3, 3') ausgerichtet wird.

2. Verfahren nach Anspruch 1, **dadurch gekennzeichnet, dass** die Nutzdaten in dem optischen Direktkanal (7, 7') mittels eines für VLC, nämlich für Visual Light Communications standardisierten optischen Trägersignals übertragen werden, wobei das optische Trägersignal eine Wellenlänge innerhalb des Wellenlängenbereichs des sichtbaren Lichts oder des daran angrenzenden Infrarot- oder Ultraviolettbereichs aufweist.

3. Verfahren nach Anspruch 1 oder 2, **dadurch gekennzeichnet, dass** die von einem optischen Sender (5, 5') der mindestens einen Datenquelle (2) auszusendenden Nutzdaten einer von der mindestens einen Datenquelle (2) zu der mindestens einen Datensenke (3, 3') zu übertragenden Datenmenge bis zur Etablierung eines stabilen optischen Direktkanals (7, 7') als Teil des hybriden Übertragungsweges zu der mindestens einen Datensenke (3, 3') in einem Pufferspeicher der mindestens einen Datenquelle (2) zwischengespeichert werden.

4. System zur leitungslosen Datenübertragung, mit mindestens einer ersten und einer zweiten Kommunikationseinrichtung (1, 1', 1"), von denen mindestens eine als Datenquelle (2) und mindestens eine andere als Datensenke (3, 3') fungiert, wobei
a.) bei der Übertragung von Nutzdaten zwischen der mindestens einen Datenquelle (2) und der mindestens einen Datensenke (3, 3') ein hybrider Übertragungsweg mit einem Funkkanal (6, 6') nach dem WLAN-Standard und mit einem optischen Direktkanal (7, 7') ausgebildet ist,
b.) die mindestens eine Datenquelle (2) eine Funksendeeinheit (4), mindestens einen optischen Sender (5, 5') und je optischem Sender (5, 5') eine Stelleinrichtung (12, 12') zur Ausrichtung des jeweiligen optischen Senders (5, 5') umfasst,
c.) die mindestens eine Datensenke (3, 3') eine Funkempfangseinheit (9, 9') und einen optischen Empfänger 10, 10') umfasst,
d.) die mindestens eine Datenquelle (2) ein Steuermodul (8) aufweist, welches von der mindestens einen Datenquelle (2) an die mindestens eine Datensenke (3, 3') auszusendende Nutzdaten durch Modulation auf entsprechende Trägersignale auf den Funkkanal (6, 6') und den optischen Direktkanal (7, 7') des hybriden Übertragungsweges aufteilt und die Stelleinrichtung (12, 12') der mindestens einen Datenquelle (2) für eine Ausrichtung ihres optischen Senders (5, 5') zu dem optischen Empfänger (10, 10') der mindestens einen Datensenke (3, 3') auf der Grundlage einer WLAN-Ortung der mindestens einen Datensenke (3, 3') ansteuert,
e.) die mindestens eine Datensenke (3, 3') ein Steuermodul (11, 11') aufweist, welches die durch die mindestens eine Datenquelle (2) übertragenen Nutzdaten nach der Demodulation der für ihre Übertragung über den hybriden Übertragungsweg verwendeten Trägersignale wieder zusammenführt.

5. System nach Anspruch 4, wobei als Bestandteil der mindestens eine Datenquelle (2) oder mit dieser in einer Wirkverbindung befindlich ein Pufferspeicher vorgesehen ist, in welchem mittels des optischen Senders (5, 5') auszusendende Nutzsignale bis zu Etablierung eines stabilen optischen Direktkanals (7, 7') als Teil des hybriden Übertragungsweges zu der mindestens einen Datensenke (3, 3') zwischen gespeichert werden.

## Claims

1. Method for wireless data transmission between at least one first and one second communication device (1, 1', 1"), at least one of which acts as a data source (2) and at least one other of which acts as a data sink (3, 3'), wherein the at least one data source (2) and the at least one data sink (3, 3') are arranged so as to be able to vary location in relation to one another, but with a direct visual line of sight, and wherein a volume of data having useful data that is to be transmitted from the at least one data source (2) to the at least one data sink (3, 3') is transmitted via a hybrid transmission path comprising a radio channel (6, 6') and an optical direct channel (7, 7') by virtue of the useful data being split over the radio channel (6, 6') and the optical direct channel (7, 7') by a control module (8), designed for this purpose, of the at least one data source (2) by means of modulation onto applicable carrier signals and, after they have been transmitted, being recombined by a control module (11, 11'), designed for this purpose, of the at least one data sink (3, 3') during the demodulation of the received carrier signals, wherein the useful data in the radio channel (6, 6') are transmitted by means of a radio carrier signal standardized for WLAN networks and wherein an optical transmitter (5, 5') of the at least one data source (2), which optical transmitter is used to transmit data via the optical direct channel (7, 7'), is oriented in relation to an optical receiver (10, 10'), receiving these data, of the at least one data sink (3, 3') on the basis of WLAN locating of the at least one data sink (3, 3').

2. Method according to Claim 1, **characterized in that** the useful data are transmitted in the optical direct channel (7, 7') by means of an optical carrier signal standardized for VLC, namely for visual light communications, wherein the optical carrier signal has a wavelength within the wavelength range of visible light or of the adjacent infrared or ultraviolet range.

3. Method according to Claim 1 or 2, **characterized in that** the useful data of a volume of data to be transmitted from the at least one data source (2) to the at least one data sink (3, 3'), which useful data are to be transmitted by an optical transmitter (5, 5') of the at least one data source (2), are buffer-stored in a buffer store of the at least one data source (2) until a stable optical direct channel (7, 7') is established as part of the hybrid transmission path to the at least one data sink (3, 3').

4. System for wireless data transmission, having at least one first and one second communication device (1, 1', 1"), at least one of which acts as a data source (2) and at least one other of which acts as a data sink (3, 3'), wherein
a.) the transmission of useful data between the at least one data source (2) and the at least one data sink (3, 3') results in a hybrid transmission path having a radio channel (6, 6') based on the WLAN standard and having an optical direct channel (7, 7') being formed,
b.) the at least one data source (2) comprises a radio transmission unit (4), at least one optical transmitter (5, 5') and, for every optical transmitter (5, 5'), a positioning device (12, 12') for orienting the respective optical transmitter (5, 5'),
c.) the at least one data sink (3, 3') comprises a radio reception unit (9, 9') and an optical receiver (10, 10'),
d.) the at least one data source (2) has a control module (8) that splits useful data to be transmitted from the at least one data source (2) to the at least one data sink (3, 3') over the radio channels (6, 6') and the optical direct channel (7, 7') of the hybrid transmission path by means of modulation onto applicable carrier signals and actuates the positioning device (12, 12') of the at least one data source (2) to orient its optical transmitter (5, 5') to the optical receiver (10, 10') of the at least one data sink (3, 3') on the basis of WLAN locating of the at least one data sink (3, 3'),
e.) the at least one data sink (3, 3') has a control module (11, 11') that recombines the useful data transmitted by the at least one data source (2) after the demodulation of the carrier signals used for transmitting said useful data via the hybrid transmission path.

5. System according to Claim 4, wherein there is provision for a buffer store as part of the at least one data source (2) or in an operative connection thereto, which buffer store is used to buffer-store useful signals to be transmitted by means of the optical transmitter (5, 5') until a stable optical direct channel (7, 7') is established as part of the hybrid transmission path to the at least one data sink (3, 3').

## Revendications

1. Procédé de transmission de données sans fil entre au moins un premier et un deuxième dispositif de communication (1, 1', 1") dont l'un au moins sert de source de données (2) et dont au moins un autre sert de récepteur de données (3, 3'), l'au moins une source de données (2) et l'au moins un récepteur de données (3, 3') étant mobiles les uns par rapport aux autres, mais étant disposés en liaison de visée optique directe, et un volume de données qui comprend des données utiles et qui doit être transmis de l'au moins une source de données (2) à l'au moins un récepteur de données (3, 3') étant transmis sur un chemin de transmission hybride qui comporte un canal radio (6, 6') et un canal optique direct (7, 7'), en ce que les données utiles sont réparties, par modulation de signaux de porteuse correspondants, entre le canal radio (6, 6') et le canal optique direct (7, 7') par un module de commande (8), conçu pour cela, de l'au moins une source de données (2) et sont à nouveau rassemblées, après leur transmission, par un module de commande (11, 11'), conçu pour cela, de l'au moins un récepteur de données (3, 3') lors de la démodulation des signaux de porteuse reçus, les données utiles étant transmises dans le canal radio (6, 6') au moyen d'un signal de porteuse radio normalisé pour les réseaux WLAN et un émetteur optique (5, 5') de l'au moins une source de données (2), au moyen duquel des données sont transmises sur le canal optique direct (7, 7'), étant orienté par rapport à un récepteur optique (10, 10'), recevant ces données, de l'au moins un récepteur de données (3, 3') sur la base d'une localisation WLAN de l'au moins un récepteur de données (3, 3').

2. Procédé selon la revendication 1, **caractérisé en ce que** les données utiles sont transmises dans le canal optique direct (7, 7') au moyen d'un signal de porteuse optique normalisé pour VLC, c'est-à-dire pour des communications en lumière visible, le signal de porteuse optique ayant une longueur d'onde dans la gamme de longueurs d'onde de la lumière visible ou dans la gamme des infrarouges ou ultraviolets adjacente à celle-ci.

3. Procédé selon la revendication 1 ou 2, **caractérisé en ce que** les données utiles, transmises par un émetteur optique (5, 5') de l'au moins une source de données (2), d'un volume de données utiles qui doit être transmis par l'au moins une source de données (2) à l'au moins un récepteur de données (3, 3') sont mémorisées temporairement dans une mémoire tampon de l'au moins une source de données (2) jusqu'à l'établissement d'un canal optique direct stable (7, 7') faisant partie du chemin de transmission hybride menant à l'au moins un récepteur de données (3, 3').

4. Système de transmission de données sans fil, comprenant au moins un premier et un deuxième dispositif de communication (1, 1', 1"), dont l'un au moins sert de source de données (2) et dont au moins un autre sert de récepteur de données (3, 3'),
a) un chemin de transmission hybride qui comprend un canal radio (6, 6') selon la norme WLAN et un canal optique direct (7, 7') étant formé entre l'au moins une source de données (2) et l'au moins un récepteur de données (3, 3') lors de la transmission de données utiles,
b.) l'au moins une source de données (2) comprenant une unité d'émission radio (4), au moins un émetteur optique (5, 5') et, pour chaque émetteur optique (5, 5'), un dispositif de réglage (12, 12') destiné à orienter l'émetteur optique respectif (5, 5'),
c.) l'au moins un récepteur de données (3, 3') comprenant une unité de réception radio (9, 9') et un récepteur optique (10, 10'),
d.) l'au moins une source de données (2) comportant un module de commande (8) qui répartit des données utiles, qui doivent être transmises de l'au moins une source de données (2) à l'au moins un récepteur de données (3, 3"), par modulation de signaux de porteuse correspondants, entre le canal radio (6, 6') et le canal optique direct (7, 7') du chemin de transmission hybride et qui commande le dispositif de réglage (12, 12') de l'au moins une source de données (2) de manière à orienter son émetteur optique (5, 5') par rapport au récepteur optique (10, 10') de l'au moins un récepteur de données (3, 3') sur la base d'une localisation WLAN de l'au moins un récepteur de données (3, 3'),
e.) l'au moins un récepteur de données (3, 3') comportant un module de commande (11, 11') qui rassemble les données utiles, transmises par l'au moins une source de données (2), après la démodulation des signaux de porteuse utilisés pour sa transmission sur le chemin de transmission hybride.

5. Système selon la revendication 4, une mémoire tampon étant prévue qui fait partie de l'au moins une source de données (2) ou qui est reliée fonctionnellement à celle-ci et dans laquelle des signaux utiles, qui doivent être envoyés au moyen de l'émetteur optique (5, 5'), sont mémorisés temporairement jusqu'à l'établissement d'un canal optique direct stable (7, 7') faisant partie du chemin de transmission hybride menant à l'au moins un récepteur de données (3, 3').
